# EUROPÄISCHE PATENTANMELDUNG

(11) **EP 0 838 916 A1**
(43) Veröffentlichungstag der Anmeldung: **29.04.1998**
(21) Anmeldenummer: 97112444.1
(22) Anmeldetag: 21.07.1997
(51) Int. Cl.: H04J 3/06

(54) **Verfahren zur Synchronisation von Übertragungen mit konstanter Bitrate in ATM-Netzen und Schaltungsanordnung zur Durchführung des Verfahrens**

(30) Priorität: 24.10.1996 DE 19961044238
(71) Anmelder: KRONE Aktiengesellschaft, 14167 Berlin (DE)
(72) Erfinder: Stadler, Bruno, Dipl.-Ing., 12487 Berlin (DE); Krause, Olaf, Dipl.-Ing., 99510 Apolda (DE)
(74) Vertreter: Zucker, Volker, Dipl.-Ing., et al

(57) **Zusammenfassung**

Die Erfindung betrifft ein Verfahren zur Synchronisation von Übertragungen mit konstanter Bitrate in ATM-Netzen und Schaltungsanordnungen zur Durchführung des Verfahrens, bei dem den eingegangenen ATM-Zellen auf der Empfängerseite ein Zeitstempel T_{S} zugeführt wird, die Daten verzögert ausgegeben werden, die tatsächliche Verzögerungszeit (T_{A}-T_{S}) mit einem vorgegebenen Sollwert t_{V} verglichen werden, aufgrund der Fehlergröße t_{R}=t_{V}-(T_{A}-T_{S}) von einem Regler (13) eine Stellgröße generiert wird, der die Taktfrequenz einer Zeitbasis (14) entgegen der Fehlergröße nachregelt.

## Beschreibung

Die Erfindung betrifft ein Verfahren zur Synchronisation von Übertragungen mit konstanter Bitrate in ATM-Netzen und Schaltungsanordnungen zur Durchführung des Verfahrens.

Bei CBR (Constant Bit Rate)-Übertragungen ist netzweit ein einheitlicher Systemtakt erforderlich. Hierzu wird ausgehend von einer zentralen Systemtakterzeugung eine Hierarchie derart aufgebaut, daß stets eine der miteinander kommunizierenden Seiten bezüglich des Taktes als Master fungiert und die andere Seite als Slave. Bei einer Übertragung in STM-Systemen kann der Empfänger des Slave den Takt aus dem Empfangssignal rückgewinnen und die Verarbeitung des empfangenden Signals und seinen eigenen Sender auf diesen Takt synchronisieren. In Telekommunikationssystemen ist im allgemeinen die jeweils höhere Netzebene Master bezüglich der niederen Netzebene. Im Teilnehmerbereich ist grundsätzlich das Netz der Master und die Teilnehmerseite Slave.

CBR-Übertragungen in ATM (Asynchronous Transfer Mode)-Netzen erfordern speziell Maßnahmen zur Synchronisation zwischen Quelle und Senke. Diese Situation tritt z.B. bei Sprach- und Videoübertragungen über ATM-Netze auf. Bei Übertragungen in ATM ist die Rückgewinnung eines Taktes aus dem Empfangssignal nicht möglich. Ohne spezielle Maßnahmen zur Synchronisation der als Slave zu definierenden Einrichtung würde es wegen der unvermeidlichen Frequenzabweichung unabhängiger Systeme zu Fehlfunktionen kommen. Bei einer zu niedrigen Takffrequenz des Slaves kommt es in dessen Empfänger zu einem Datenstau und im Empfänger des Masters zu einem "Datenloch". Bei zu hoher Taktfrequenz des Slaves kommt es in dessen Empfänger zu einem "Datenloch" und im Empfänger des Masters zu einem "Datenstau". Um CBR-Übertragungen in ATM-Netzen störungsfrei zu gewährleisten, sind verschiedene Verfahren bekannt, die in I-ETS 300 353 Broadband Integrated Services Digital Network (B-ISDN) Asynchronous Transfer Mode (ATM) Adaption Layer (AA2) specification-type 1" genormt sind.

Allen bekannten Verfahren ist gemeinsam, daß auf der Sendeseite (Segmentation) des Masters eine Interworking Unit angeordnet ist, die einen Eingang für den CBR-Datenstrom aufweist. Von der Interworking Unit werden ATM-Zellen generiert durch Segmentierung des CBR-Datenstroms nach AAL1, gemäß I-ETS 300 353 B-ISDN. Über einen Ausgang der Interworking Unit werden die generierten ATM-Zellen auf einen realen Übertragungskanal ausgegeben. Unter dem realen Übertragungskanal wird die Summe aller Teilübertragungsstrecken, Umsetzer, Multiplexer, Vermittlungs-einrichtungen, cross connects etc. verstanden, die auf dem Übertragungsweg zum Empfänger des Slaves passiert werden müssen. Die Übertragungszeit (delay time) über den realen Übertragungskanal ist wegen des asynchronen Übertragungsverfahrens nicht konstant, sondern schwankt um eine mittlere Zeit (DTV-Delay Time Variation). Die quasi konstante Zellrate am Ausgang der Interworking Unit des Masters wird dadurch am Ende des realen Übertragungskanals mit mehr oder weniger großen Schwankungen behaftet sein. Die Empfangseinrichtungen besitzen daher stets einen Eingangspuffer. Die Größe des Eingangspuffers ist in Abhängigkeit von der zu erwartenden DTV des realen Übertragungskanals so zu dimensionieren, daß auch bei minimalem Abstand zwischen eintreffenden Zellen kein Pufferüberlauf und bei maximalem Abstand zwischen eintreffenden Zellen kein Leerlaufen des Eingangspuffers erfolgt, wenn am Ausgang des Eingangspuffers eine zeitkontinuierliche und zum Quellentakt synchrone Abforderung der Zellen erfolgt. An dem Ausgang des Eingangspuffers ist die Empfangsseite (Reassembling) einer Interworking Unit angeschaltet. Von der Interworking Unit wird nach AAL1 gemäß I-ETS 300 353 B-ISDN aus den ATM-Zellen ein CBR-Datenstrom reassembliert. Über einen weiteren Eingang wird der Interworking Unit auf der Empfängerseite ein von einer Zeitbasis erzeugter Takt zugeführt. Dieser Takt bestimmt die Datenrate des CBR-Datenstroms, der am Ausgang der Interworking Unit bereitgestellt wird.

Beim bekannten SRTS (Synchronous Residual Time-Stamp) - Verfahren wird auf der Masterseite ein SRTS-Generator angeordnet, dem über einen Eingang der Systemtakt zugeführt wird. Der SRTS-Generator erzeugt aus dem Systemtakt einen Zeitstempel, dessen Residuum RTS (Residual Time Stamp) über einen Ausgang einem zusätzlichen Eingang der Interworking Unit des Masters zugeführt wird. Die Interworking Unit des Masters fügt den RTS in den AAL1-Overhead der generierten ATM-Zellen ein. Generierung und Einfügung des RTS sind in I-ETS 300 353 B-ISDN genormt. Der RTS ist die Abweichung von einem Erwartungswert, der mit 4 Bit (1 Bit Signum, 3 Bit Wert) diese Abweichung eindeutig beschreibt. Da vorausgesetzt wird, daß der Erwartungswert als "a priori-Information" dem Empfänger bekannt ist, kann von diesem der Zeitstempel wieder regeneriert werden. Aus dem Vergleich mit der eigenen Zeitbasis kann daraus eine Nachführgröße für die Zeitbasis des Empfängers abgeleitet werden. Dazu wird z.B. auf der Empfangsseite ein SRTS-Generator angeordnet, dem über einen Eingang der Takt der Zeitbasis zugeführt wird. Der SRTS-Generator erzeugt, ähnlich wie der SRTS-Generator auf der Masterseite, aus dem freilaufenden Takt der Zeitbasis den entsprechenden RTS, der auf einen Eingang eines Soll/Ist-Vergleiches geführt wird. Der zweite Eingang des Soll/Ist-Vergleiches ist mit einem zusätzlichen Ausgang der Interworking Unit auf der Empfängerseite verbunden. Die Interworking Unit auf der Empfängerseite entnimmt den empfangenen ATM-Zellen den RTS der Masterseite und führt diesen dem zweiten Eingang des Soll/Ist-Vergleichers zu. Der Soll/Ist-Vergleicher leitet aus dem Vergleich der beiden Eingangssignale eine Fehlergröße ab, die an einen Regler geführt wird. Der Regler generiert aus der Fehlergröße eine Stellgröße, die an die Zeitbasis übergeben wird, so daß die Zeitbasis ihren Takt entsprechend der Stellgröße nachregelt. Eine ausführliche Darstellung ist aus "ATM-Netzwerke, 3. Aufl., S. 179 ff.; Othmar Kyas, DATACOM-Verlag" zu entnehmen. Nachteilig an dem bekannten Verfahren ist, daß sowohl die Masterseite als auch die Empfängerseite hardund/oder softwaremäßig modifiziert werden müssen, so daß das beschriebene Verfahren sehr aufwendig ist.

Weiter ist aus der I-ETS 300 353 B-ISDN das ACR (Adaptive Clock Recovery)-Verfahren bekannt, das ohne Modifikation auf der Masterseite auskommt. Dazu weist der Eingangspuffer auf der Empfängerseite einen zusätzlichen Ausgang auf. An diesem zusätzlichen Ausgang liegt ein Steuersignal an, das anzeigt, ob der Eingangspuffer zu mehr als der Hälfte gefüllt ist. Dieses Steuersignal wird an den Eingang eines Reglers übergeben. Der Regler generiert aus dem Steuersignal eine Stellgröße, die der Zeitbasis zugeführt wird. Die Zeitbasis führt dann entsprechend der Stellgröße den Takt nach. Nachteilig an dem Verfahren ist, daß die Belegung im Eingangspuffer mehrere Zellen umfassen muß und diese Zwischenspeicherung als Verzögerungszeit in die Übertragung eingeht. Bei einer Übertragung mit 64 kbits/s bedeutet dies pro Zelle eine zusätzliche Verzögerung von 6 ms.

Der Erfindung liegt daher das technische Problem zugrunde, ein Verfahren zur Synchronisation von Übertragungen mit konstanter Bitrate in ATM-Netzen und Schaltungsanordnungen zur Durchführung des Verfahrens zu schaffen, bei dem mit geringen hard- oder softwaremäßigen Modifikationen geringe Verzögerungszeiten auftreten.

Die Lösung des Problems ergibt sich durch die Merkmale der Patentansprüche 1 und 4. Dabei werden die übertragenen ATM-Zellen auf der Empfangsseite in deren Eingangspuffer abgespeichert. Den ATM-Zellen wird bei Empfang ein Zeitstempel T_{S} zugeordnet, der mit dem Zeitpunkt des Empfangs korreliert. Die in den ATM-Zellen gespeicherten Daten werden zeitlich verzögert zum Empfangszeitpunkt, beginnend zum Zeitpunkt T_{A}, ausgegeben. Bei Beginn der Datenausgabe wird die Vertögerungszeit (T_{A}-T_{S}) erfaßt und mit einer vorgegebenen Sollwertzeit t_{V} verglichen. Aus der Differenz wird eine Fehlergröße t_{R} erzeugt aus welcher der Regler eine Stellgröße generiert, die die Taktfrequenz der Zeitbasis entgegen der Abweichung nachregelt. Dadurch wird eine empfangsseitige Synchronisation erreicht, die keine soft- oder hardwaremäßigen Modifikation der Senderseite erfordert. Des weiteren kann der vorgegebene Sollwert für die Verzögerungszeit sehr klein gewählt werden, da dieser nach unten nur durch die Variation der Übertragungszeiten DTV der ATM-Zellen begrenzt ist. Weitere vorteilhatte Ausgestaltungen der Erfindung ergeben sich aus den Unteransprüchen.

Die Erfindung wird nachfolgend anhand eines bevorzugten Ausführungsbeispieles näher erörtert. Die Figuren zeigen:

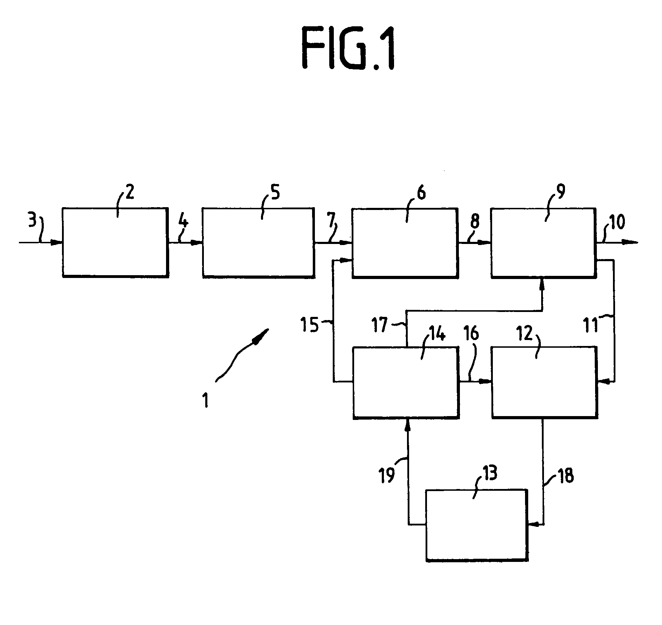

Fig. 1: eine schematisches Blockschaltbild eines ATM-Netzwerkes,
Fig. 2: ein Zeitdiagramm der Startsituation,
Fig. 3: ein Zeitdiagramm eines Betriebszustandes und
Fig. 4: ein Zeitdiagramm der Regelung.

Das ATM-Netzwerk 1 umfaßt eine Interworking Unit 2 mit einem Eingang 3 und einem Ausgang 4 für die Senderichtung, wobei im Blockschaltbild nur die Senderichtung dargestellt ist. Der zu übertragende CBR-Datenstrom wird über den Eingang 3 der Interworking Unit 2 übergeben. Von der Interworking Unit 2 werden ATM-Zellen durch Segmentierung des CBR-Datenstroms gemäß AAL1 generiert. Über den Ausgang 4 werden die generierten ATM-Zellen auf einen realen Übertragungskanal 5 übergeben. Der reale Übertragungskanal 5 stellt die Summe aller Teilübertragungsstrecken bis zum Empfänger dar. Die Empfängerseite des ATM-Netzwerkes 1 umfaßt einen Eingangspuffer 6 mit einem Eingang 7 und einem Ausgang 8, eine Interworking Unit 9 mit einem Datenausgang 10 und einem Signalausgang 11, einen Soll-/Ist-Vergleicher 12, einen Regler 13 und eine Zeitbasis 14. Die über den realen Übertragungskanal 5 übertragenen ATM-Zellen gelangen dann über den Eingang 7 in den Eingangspuffer 6, wo diese abgespeichert werden. Mit dem Empfang der ATM-Zellen am Eingangspuffer 6 wird den ATM-Zellen jeweils ein Zeitstempel T_{S} zugeordnet, der mit dem Zeitpunkt des Empfangs korreliert. Dies geschieht durch eine Verbindung 15 zwischen einem zusätzlichen Ausgang der Zeitbasis 14 und einem zusätzlichen Eingang des Eingangspuffers 6. Da dieser Zeitstempel T_{S} nicht in die eingegangene ATM-Stelle eingefügt werden muß, sondern nur dieser zugeordnet sein muß, und der Zeitstempel nicht vom Sender zum Empfänger übertragen werden muß, kann auf aufwendige Komprimierungen (z.B. Residuum-RTS) verzichtet werden. Die Zeitbasis 14 besitzt einen weiteren Ausgang, der über eine Verbindung 16 mit einem Eingang des Soll-/Ist-Vergleichers 12 verbunden ist und über welchen ständig die aktuelle Zeitinformation T_{A} übertragen wird. Werden nun die ATM-Zellen vom Eingangspuffer 6 an die Interworking Unit 9 übergeben, so wird der CBR-Datenstrom wieder reassembliert, wobei für die Verzögerungszeit zwischen Empfang einer ATM-Zelle bis zum Beginn der Ausgabe im CBR-Datenstrom ein Sollwert t_{V} vorgegeben ist. Die tatsächliche Verzögerungszeit ist abhängig von den Schwankungen der Übertragungszeit vom Sender zum Empfänger und der Taktfrequenz, mit der der CBR-Datenstrom ausgegeben wird. Diese Taktfrequenz wird der Interworking Unit 9 über eine Verbindung 17 von der Zeitbasis 14 zugeführt. Über den Signalausgang 11 wird der Zeitstempel T_{S} einer reassemblierten ATM-Zelle ausgegeben und dem anderen Eingang des Soll-/Ist-Vergleichers 12 zugeführt. Der Soll-/Ist-Vergleicher 12 leitet aus dem Vergleich der Differenz der beiden Eingangssignale T_{A} und T_{S} mit dem vorgegebenen Sollwert der Verzögerungszeit t_{V} eine Fehlergröße t_{R} ab. Die Fehlergröße t_{R} wird vom Ausgang des Soll-/Ist-Vergleichers 12 über eine Verbindung 18 an einen Eingang des Reglers 13 übergeben. Der Regler 13 generiert aus der Fehlergröße t_{R} eine Stellgröße, die vom Ausgang des Reglers 13 über eine Verbindung 19 an einen Eingang der Zeitbasis 14 übergeben wird. Die übergebene Stellgröße regelt die Taktfrequenz der Zeitbasis 14 entgegen der Fehlergröße t_{R} nach.

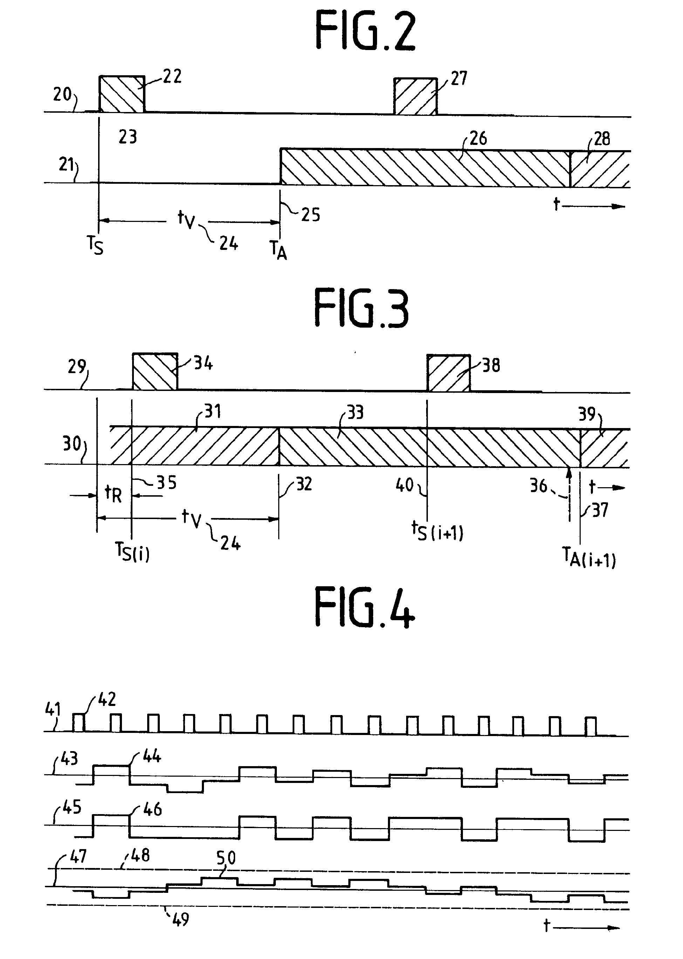

In der Fig. 2 ist die Startsituation dargestellt, d.h. der Empfang und die Ausgabe einer ersten ATM-Zelle. Die Zeitachse 20 stellt das Zeitdiagramm am Eingang 7 des Eingangspuffers 6 dar. Die Zeitachse 21 stellt das Zeitdiagramm am Ausgang der Interworking Unit 9 dar. Die erste eingehende ATM-Zelle 22 wird mit einem Zeitstempel T_{S} 23 versehen. Die Interworking Unit 9 übernimmt diese erste ATM-Zelle 22 und verzögert den Beginn der Ausgabe um die Verzögerungszeit t_{V} 24 bis zum Zeitpunkt T_{A} 25. Für diese Startsituation wird somit durch den Soll-/Ist-Vergleicher 12 die Fehlergröße t_{R}=t_{V}-(T_{A}-Tₛ) = 0 bestimmt. Dieser Wert wird an den Regler 13 übergeben, der entsprechend keine Stellgröße an die Zeitbasis 14 ausgibt. Die Daten der ersten eingegangenen ATM-Zelle 22 werden daher mit dem noch ungeregelten Takt der Zeitbasis 14 als Datenstromabschnitt 26 am Datenausgang 10 der Interworking Unit 9 ausgegeben. Die Daten einer nachfolgend eingegangenen ATM-Zelle 27 werden unterbrechungsfrei als Datenstromabschnitt 28 an den Datenstromabschnitt der ersten ATM-Zelle 22 angefügt.

In der Fig. 3 ist die Betriebssituation dargestellt, d.h. Empfang und Ausgabe von ATM-Zellen nach der Startsituation und der damit verbundene Regelmechanismus. Die Zeitachse 29 stellt das Zeitdiagramm am Eingang 7 des Eingangspuffers 6 dar. Die Zeitachse 30 stellt das Zeitdiagramm am Ausgang der Interworking Unit 9 dar. Die Interworking Unit 9 beendet die Ausgabe der Daten 31 einer nicht dargestellten Zelle (i-1) zum Zeitpunkt T_{A(i)} 32 und beginnt mit der Ausgabe der Daten 33 der nächsteingehenden ATM-Zelle (i) 34, die im Eingangspuffer 6 bereitsteht und den Zeitstempel T_{S(i)} 35 trägt. Der Zeitstempel T_{S(i)} 35 wird von der Interworking Unit 9 an den Soll-/Ist-Vergleicher 12 übergeben. Der Soll-/Ist-Vergleicher 12 vergleicht die Differenz des Zeitstempels T_{S(i)} 35 und der aktuellen Zeit T_{A(i)} 32, die über die Verbindung 16 von der Zeitbasis 14 kontinuierlich bereitgestellt wird, mit der fest vorgegebenen Verzögerungszeit t_{V} 24.Hieraus wird die Fehlergröße mit t_{R}=t_{V}-(T_{A}-T_{S})≠0 bestimmt. Die Fehlergröße t_{R} wird über die Verbindung 18 an den Regler 13 übergeben, der daraus eine Stellgröße ableitet, die über die Verbindung 19 an die Zeitbasis übergeben wird und eine Nachführung der Taktfrequenz der Zeitbasis 14 bewirkt. In der Fig. 3 ist der Fall dargestellt, daß durch den verspäteten Eingang der ATM-Zelle 34 oder eine zu hohe Taktrate der Zeitbasis 14 an ihren Ausgang der Abstand (T_{A}-T_{S})≤t_{V} wurde und damit die Fehlergröße t_{R} einen positiven Wert angenommen hat. Der beschriebene Regelvorgang ist daher so eingestellt, daß dieser für diesen Fall zu einer Verringerung der Taktfrequenz der Zeitbasis 14 an ihrem Ausgang führt. Würden ohne diese Regelung die Daten der ATM-Stelle 34 der ATM-Zelle 34 als Datenabschnitt 33 im Datenstrom am Datenausgang 10 der Interworking Unit ausgegeben werden, so wäre die Ausgabe zum Zeitpunkt 36 beendet. Durch die Wirkung der Regelung erfolgt eine Verschiebung auf den Zeitpunkt T_{A(i+1)} 37. Der gesamte Vorgang wiederholt sich nunmehr für die Ausgabe der nächsten ATM-Zelle 38 als Datenabschnitt 39 am Datenausgang 10 der Interworking Unit 9 stets in gleicher Weise, wobei der neuen ATM-Zelle 38 ein Zeitstempel T_{S(i+1)} 40 zugeordnet ist.

In der Fig. 4 ist eine Ausführung des Regelkreises, die auf einem integrierenden Regler beruht, dargestellt. Es ist das Zeitdiagramm 41 am Eingang des Eingangspuffers 6 dargestellt. Dargestellt sind die eintreffenden ATM-Zellen 42, wobei auf die Darstellung der unterschiedlichen Abstände der eintreffenden ATM-Zellen 42 aufgrund der DTV verzichtet wurde. Das Zeitdiagramm 43 stellt die Fehlergröße t_{R} 44 dar, wie diese vom Soll- /Ist-Vergleicher 12 jeweils zu den Zeitpunkten T_{A(i)} ermittelt und an den Regler 13 übergeben wird. Das Zeitdiagramm 45 stellt die Signumkurve 46 dar, die im Regler aus dem Zeitdiagramm 43 der Fehlergröße t_{R} 44 abgeleitet wird. Das Zeitdiagramm 47 stellt die Taktfrequenz am Ausgang der Zeitbasis 14 dar. Dargestellt sind weiter die Größe der Sollfrequenz, die identisch ist mit der Zeitachse des Zeitdiagramms 47, der zulässige Maximalwert 48, der zulässige Minimalwert 49 und der durch die Regelung bedingte Istverlauf 50. Der Istverlauf 50 ist das Integral der Signumkurve 46, indem durch den Regler 13 über die Verbindung 19 zu jedem Zeitpunkt T_{A(i)} mit einem Stellsignal die Taktfrequenz am Ausgang der Zeitbasis 14 um eine Stufe erhöht wird, wenn die Signumkurve einen Wert von -1 besitzt bzw. um eine Stufe erniedrigt wird, wenn die Signumkurve 46 einen Wert von 1 besitzt. Die Größe der Stufen, um die die Taktfrequenz der Zeitbasis 14 verändert wird, ist so gewählt, daß in dem Bereich zwischen Maximalwert 48 und Minimalwert 49 der Taktfrequenz eine hinreichend große Anzahl von Stufen liegt. Die Fehlergröße ergibt sich für das Verfahren aus der Überlagerung von Frequenzablage des Taktes der Zeitbasis 14 und der DTV. Da die Frequenzablage des Taktes aufgrund der Benutzung hochstabiler Oszillatoren mit Δf≤200 ppm sehr niedrig ist, wird der Einzelwert der Fehlergröße im wesentlichen durch die DTV bestimmt. Deren Einfluß wird aber, bedingt durch die Einspeisung der ATM-Zellen auf der Senderseite mit konstanter Zellrate, durch die Beziehung ∑ DTVᵢ=0 über länger Zeiträume eliminiert. Die Größe der Stufen, um die die Taktfrequenz der Zeitbasis 14 verändert wird, ist daher an der möglichen Frequenzablage des Taktes orientiert und nicht darauf ausgerichtet, die Fehlergröße t_{R} während der Ausgabe einer ATM-Zelle auf Null auszugleichen. Daher ergibt ein integrierter Regler, der die Signumkurve auswertet, ein besseres Regelverhalten als ein Proportionalregler, der die DTV ausregeln würde.

Erfolgt die Übergabe der ATM-Zellen an den Eingangspuffer 6 über ein UTOPIA (Universal Test and Operations Physical Interface for ATM), so kann der Zeitpunkt T_{S} aus dem SOC (Start of Cell)-Signal abgeleitet werden Die Verzögerungszeit t_{V} kann sehr niedrig angesetzt werden und setzt nicht wie beim ACR-Verfahren voraus, daß mehrere Zellen empfangen werden. Bedingung ist, daß die Verzögerungszeit t_{V} mit Sicherheit größer als die im konkreten ATM-Netz auftretende Variation des Abstandes zwischen zwei empfangenen Zellen (Transmission Delay Time Variation) ist. In einem ATM-Netz, in welchem Vermittlungs- und Übertagungskapazität nicht bis an die Grenzwerte ausgelastet sind, ist diese Variation gering. Bei einer konkreten Anwendung sind die Bedingungen z.B. derart, daß die Variation kleiner ist als die Ausgabezeit für eine ATM-Zelle, so daß noch vor dem Eingang einer zweiten ATM-Zelle mit der Ausgabe begonnen werden kann.

Ein akzeptierbarer Nachteil des Verfahrens ist, daß die Folge der auf der Empfangsseite generierten Zeitstempel T_{S} mit der DTV überlagert sind. Der Regelkreis führt aber daher die Taktfrequenz der Zeitbasis 14 der DTV entsprechend nach. Die Istfrequenzkurve 50 weist daher eine DTV bedingte Schwankung auf. Im Gegensatz hierzu weist das Verfahren SRTS keine Beeinflussung durch die DTV auf. Regelbedingte Schwankungen der Istfrequenzkurve treten aber auch hier auf, da der RTS mit einem digitalen Restfehler behaftet ist. Dieser führt als Momentanwert ebenfalls zu einem Stellvorgang und mittelt sich erst über eine gewisse Anzahl von Übertragungen aus.

### Bezugszeichenliste

- 1): ATM-Netz
- 2): Interworking Unit
- 3): Eingang
- 4): Ausgang
- 5): Übertragungskanal
- 6): Eingangspufferl
- 7): Eingang
- 8): Ausgang
- 9): Interworking Unit
- 10): Interworking Unit
- 11): Signalausgang
- 12): Soll-Ist-Vergleicher
- 13): Regler
- 14): Zeitbasis
- 15): Verbindung
- 16): Verbindung
- 17): Verbindung
- 18): Verbindung
- 19): Verbindung
- 20): Zeitachse
- 21): Zeitachse
- 22): ATM-Zelle
- 23): Zeitstempel T_{S}
- 24): Verzögerungszeit T_{V}
- 25): Zeitpunkt T_{A}
- 26): Datenstromabschnitt
- 27): ATM-Zelle
- 28): Datenstromabschnitt
- 29): Zeitachse
- 30): Zeitachse
- 31): Daten
- 32): T_{A(i)}
- 33): Datenabschnitt
- 34): ATM-Zelle (i)
- 35): Zeitstempel T_{S(i)}
- 36): Zeitpunkt
- 37): Zeitpunkt T_{A(i+1)}
- 38): ATM-Zelle
- 39): Datenabschnitt
- 40): Zeitstempel T_{S(i+1)}
- 41): Zeitdiagramm
- 42): ATM-Zelle
- 43): Zeitdiagramm
- 44): Fehlergröße t_{R}
- 45): Zeitdiagramm
- 46): Signumkurve
- 47): Zeitdiagramm
- 48): Maximalwert
- 49): Minimalwert
- 50): Istverlauf

## Patentansprüche

1. Verfahren zur Synchronisation von Übertragungen mit konstanter Bitrate in ATM-Netzen (1), in welchen ein Datenstrom mit konstanter Bitrate auf der Senderseite von einer Interworking Unit (2) in einen ATM-Zellenstrom umgesetzt wird, mittels einer Empfangseinrichtung umfassend einen Eingangspuffer (6), eine Interworking Unit (9), eine Zeitbasis (14) und einen Regler (13), bei dem
a) die ATM-Zellen nach der Übertragung auf der Empfangsseite in dem Eingangspuffer (6) abgespeichert werden,
b) die ATM-Zellen im Eingangspuffer (6) jeweils einen Zeitstempel Tₛ zugeordnet bekommen, welcher mit dem Zeitpunkt ihres Empfangs korreliert,
c) die Ausgabe der in den ATM-Zellen gespeicherten Daten durch die Interworking Unit (9) als Datenstrom mit konstanter Bitrate gegenüber dem Empfangszeitpunkt verzögert zu einem Zeitpunkt T_{A} begonnen wird,
d) für diese Verzögerungszeit ein Solwert t_{V} vorgegeben ist, wobei dieser Sollwert t_{V} größer als die Variation der Ubertragungszeit DTV der ATM-Zellen vom Sender zum Empfänger ist,
e) die tatsächliche Verzögerungszeit durch Bildung der Differenz T_{A}-Tₛ ermittelt wird,
f) eine Fehlergröße t_{R}=t_{V}-(T_{A}-T_{S}) erzeugt und an den Regler (13) übergeben wird,
g) der Regler (13) aus der Fehlergröße t_{R} eine Stellgröße generiert,
h) die Stellgröße an die Zeitbasis (14) übergeben wird und
i) die Taktfrequenz der Zeitbasis (14) entsprechend der Stellgröße entgegen der Abweichung nachgeregelt wird.

2. Verfahren nach Anspruch 1, **dadurch gekennzeichnet, daß** der Regler (13) als integrierender Regler ausgebildet ist.

3. Verfahren nach Anspruch 2, **dadurch gekennzeichnet, daß** der Regler (13) aus der Fehlergröße t_{R} den Signumwert ableitet und gemäß Δf = -k ∑(SIG_{TA(i)}) die Taktfrequenz der Zeitbasis (14) nachregelt.

4. Empfängerstation für ATM-Netzwerke, umfassend einen Eingangspuffer, eine Interworking Unit, eine Zeitbasis, einen Soll/Ist-Vergleicher und einen Regler, bei der ein Ausgang des Eingangspuffers mit einem Eingang der Interworking Unit verbunden ist, ein Ausgang der Interworking Unit mit einem Eingang des Soll/Ist-Vergleichers verbunden ist, ein Ausgang des Soll/Ist-Vergleichers mit einem Eingang des Reglers verbunden ist, ein Ausgang des Reglers mit einem Eingang der Zeitbasis verbunden ist und ein Ausgang der Zeitbasis mit einem Eingang der Interworking Unit verbunden ist, **dadurch gekennzeichnet, daß** ein weiterer Ausgang der Zeitbasis (14) mit einem Eingang des Eingangspuffers (16) und ein weiterer Ausgang der Zeitbasis (14) mit einem Eingang des Soll/Ist-Vergleichers (12) verbunden ist.

5. Empfängerstation nach Anspruch 4, **dadurch gekennzeichnet, daß** der Regler (13) als integrierender Regler ausgebildet ist.
